# EUROPEAN PATENT SPECIFICATION

(11) **EP 4 488 155 B1**
(45) Date of publication and mention of the grant of the patent: **23.07.2025**
(21) Application number: 23213945.1
(22) Date of filing: 04.12.2023
(51) Int. Cl.: B62J 45/415, B62K 5/10

(54) **LEANING VEHICLE AND ERROR DETECTION METHOD AND CALIBRATION METHOD FOR TILT SENSOR**
NEIGEFAHRZEUG UND FEHLERERKENNUNGSVERFAHREN UND KALIBRIERUNGSVERFAHREN FÜR NEIGUNGSSENSOR
VÉHICULE INCLINABLE ET PROCÉDÉ DE DÉTECTION D'ERREUR ET PROCÉDÉ D'ÉTALONNAGE POUR CAPTEUR D'INCLINAISON

(30) Priority: 06.07.2023 JP 2023111325
(43) Date of publication of application: 08.01.2025
(73) Proprietor: Yamaha Hatsudoki Kabushiki Kaisha, Iwata-shi, Shizuoka-ken 438-8501 (JP)
(72) Inventor: Nagata, Tatsuya, Iwata-shi, Shizuoka-ken, 438-8501 (JP); Uchiyama, Toshifumi, Iwata-shi, Shizuoka-ken, 438-8501 (JP)
(74) Representative: Grünecker Patent- und Rechtsanwälte PartG mbB

(56) References cited:
- JP-B2- 6 923 327
- US-A1- 2020 269 916
- US-B2- 8 919 197

## Description

The present invention relates to a leaning vehicle and method for detecting an error in a tilt sensor of a leaning vehicle and a method for calibrating a tilt sensor of a leaning vehicle sensor.

A leaning vehicle having a left wheel, a right wheel and a vehicle body frame capable of tilting relative to the ground has been known in the art. A leaning vehicle has been known in the art, including a tilt sensor that detects the tilt angle of the vehicle body frame, a lean actuator that makes the vehicle body frame tilted or stand upright, and a control device that controls the lean actuator based on the detection result of the tilt sensor, as described in WO 2020/045622 A1, for example.

With the leaning vehicle, the vehicle body frame can self-stand by controlling the lean actuator so that the tilt angle of the vehicle body frame from the vertical line (i.e., the bank angle) is zero, for example. That is, it is possible to perform a self-stand control of making the vehicle body frame self-stand. By performing the self-stand control when the leaning vehicle is stopped, the vehicle body frame can be made to stand upright without the rider supporting the vehicle body frame. With the leaning vehicle described above, the lean actuator tilts the vehicle body frame when turning left or when turning right, allowing the rider to easily turn the leaning vehicle. Thus, with the leaning vehicle described above, various controls are possible by using the tilt sensor and the lean actuator.

Now, when mounting the tilt sensor on the vehicle body frame, the position or attitude of the tilt sensor may shift from the normal position or attitude. That is, an installation error of the tilt sensor may occur. In addition, the mounting part for mounting the tilt sensor on the vehicle body frame may deteriorate over time. When the mounting part deteriorates over time, the position or attitude of the tilt sensor may shift. If the position or attitude of the tilt sensor shifts, the origin position of the tilt sensor shifts from its normal position. Hereinafter, the shift of the origin position from the normal position will be referred to as an origin shift.

If the tilt sensor has an origin shift, it is no longer possible to desirably perform a control using the lean actuator. For example, if the self-stand control is executed without noticing the origin shift of the tilt sensor, the lean actuator will attempt to keep the vehicle body frame in a tilted attitude. Therefore, it is not possible to automatically make the vehicle body frame stand upright.

US8919197B discloses a leaning vehicle with a tilt sensor and a control device that is configured to receive a signal from the tilt sensor.

It is the object of the present invention to provide a leaning vehicle and method for detecting an error in a tilt sensor of a leaning vehicle and a method for calibrating a tilt sensor of a leaning vehicle sensor which can determine the presence/absence of an origin shift of the tilt sensor of a leaning vehicle and/or can calibrate the origin shift of the tilt sensor of a leaning vehicle. According to the present invention said object is solved by a leaning vehicle having the features of independent claim 1. Moreover, according to the present invention said object is solved by a method for detecting an error in a tilt sensor of a leaning vehicle having the features of independent claim 8. Furthermore, said object is solved by a method for calibrating a tilt sensor of a leaning vehicle sensor according to claim 9. Preferred embodiments are laid down in the dependent claims.

A leaning vehicle disclosed herein includes: a vehicle body frame having a head pipe; a left wheel arranged leftward relative to the head pipe; a right wheel arranged rightward relative to the head pipe; a link mechanism that links together the vehicle body frame, the left wheel and the right wheel; a tilt sensor mounted on the vehicle body frame that detects a bank angle of the vehicle body frame; a lean actuator that applies a torque around a rotation axis extending in a vehicle front-rear direction on the vehicle body frame; a control device that receives a signal from the tilt sensor to control the lean actuator; and a torque detection device that detects an output torque of the lean actuator. The control device includes: a self-stand control section that executes a self-stand control of controlling the lean actuator so that a detected bank angle, which is the bank angle of the vehicle body frame detected by the tilt sensor, becomes zero; and a determination section that determines the presence/absence of an origin shift of the tilt sensor based on whether or not the detected bank angle is constant and an absolute value of the output torque of the lean actuator is equal to or greater than a predetermined threshold value while the self-stand control is executed.

With the leaning vehicle described above, when the tilt sensor has no origin shift, the vehicle body frame stands upright by executing the self-stand control. When the vehicle body frame is standing upright, the gravity acting on the vehicle body frame acts vertically downward, and the gravity does not act as a torque that tilts the vehicle body frame. Therefore, even when the absolute value of the output torque of the lean actuator is relatively small, the lean actuator can maintain the vehicle body frame in an upright attitude. Therefore, when the tilt sensor has no origin shift, the absolute value of the output torque of the lean actuator is kept low.

On the other hand, when the tilt sensor has an origin shift, the control device will erroneously recognize an attitude of the vehicle body frame that is tilted from the vertical line as the upright attitude. During the self-stand control, the lean actuator attempts to maintain the vehicle body frame in a tilted attitude. However, when the vehicle body frame is tilted, the gravity acting on the vehicle body frame acts as a torque that tilts the vehicle body frame. Therefore, the lean actuator needs to output a torque commensurate with the torque to maintain the attitude of the vehicle body frame. The lean actuator needs to output a relatively large torque. Therefore, when the tilt sensor has an origin shift, the absolute value of the output torque of the lean actuator is relatively large.

Therefore, by executing the self-stand control while the leaning vehicle is stopped, it is possible to determine the presence/absence of an origin shift of the tilt sensor based on the absolute value of the output torque of the lean actuator. With the leaning vehicle described above, the presence/absence of the origin shift of the tilt sensor is determined based on whether or not the detected bank angle of the tilt sensor is constant and the absolute value of the output torque of the lean actuator is equal to or greater than a threshold value. With the leaning vehicle described above, it is possible to easily determine whether or not the tilt sensor has an origin shift.

The control device may include: a shift amount storage section that stores a predetermined relationship between the output torque of the lean actuator and a shift amount of the tilt sensor; and a shift amount calculation section that calculates the shift amount of the tilt sensor based on the output torque of the lean actuator detected by the torque detection device and the relationship stored in the shift amount storage section if it is determined by the determination section that there is an origin shift.

Therefore, it is possible to quickly calculate the shift amount of tilt sensor based on the output torque of the lean actuator.

The self-stand control section may include: an output torque storage section that stores a predetermined relationship between the detected bank angle and the output torque of the lean actuator; an output torque determination section that determines the output torque of the lean actuator based on the detected bank angle detected by the tilt sensor and the relationship stored in the output torque storage section; and a control execution section that controls the lean actuator so as to output the output torque determined by the output torque determination section. The relationship stored in the shift amount storage section may be such a relationship that a shift amount C of the tilt sensor is C=B-A when the output torque of the lean actuator is T, where T is a torque around the rotation axis of the vehicle body frame that is generated by gravity and acts upon the vehicle body frame when the bank angle of the vehicle body frame is B; and in the relationship stored in the output torque storage section, A is the detected bank angle when the output torque of the lean actuator is T.

The control device may include a calibration section that calibrates an origin position of the tilt sensor from P0 to P0+ΔP, where P0 is the origin position of the tilt sensor and ΔP is the shift amount calculated by the shift amount calculation section.

Therefore, it is possible to automatically calibrate the origin shift of the tilt sensor.

The control device may include an origin position changing section that changes an origin position of the tilt sensor when it is determined by the determination section that there is an origin shift. The self-stand control section may be configured to execute the self-stand control based on the changed origin position after the origin position changing section changes the origin position. The origin position changing section may be configured to repeat changing the origin position of the tilt sensor until it is determined by the determination section that there is no origin shift.

Therefore, it is possible to automatically calibrate the origin shift of the tilt sensor.

The link mechanism may include: a left wheel support member that supports the left wheel; a right wheel support member arranged rightward of the left wheel support member that supports the right wheel; a link member extending leftward and rightward of the vehicle body frame; a central link shaft extending in a vehicle front-rear direction that rotatably links the vehicle body frame to the link member; a left link shaft extending in the vehicle front-rear direction that rotatably links the left wheel support member to the link member; and a right link shaft extending in the vehicle front-rear direction that rotatably links the right wheel support member to the link member. The lean actuator may be configured to apply a torque around the central link shaft on the vehicle body frame.

The tilt sensor may be an inertial measurement unit IMU provided on the vehicle body frame.

A method for detecting an error in a tilt sensor of a leaning vehicle disclosed herein may be a method for detecting an error in a tilt sensor of a leaning vehicle, the leaning vehicle including a vehicle body frame having a head pipe; a left wheel arranged leftward relative to the head pipe; a right wheel arranged rightward relative to the head pipe; a link mechanism that links together the vehicle body frame, the left wheel and the right wheel; a tilt sensor mounted on the vehicle body frame that detects a bank angle of the vehicle body frame; a lean actuator that applies a torque around a rotation axis extending in a vehicle front-rear direction on the vehicle body frame; and a control device that receives a signal from the tilt sensor to control the lean actuator, the method including: executing a self-stand control of controlling the lean actuator so that a detected bank angle, which is the bank angle of the vehicle body frame detected by the tilt sensor, becomes zero; detecting an output torque of the lean actuator; and determining the presence/absence of an origin shift of the tilt sensor based on whether or not the detected bank angle is constant and an absolute value of the output torque of the lean actuator is equal to or greater than a predetermined threshold value.

A method for calibrating a tilt sensor of a leaning vehicle disclosed herein may be a method for calibrating a tilt sensor of a leaning vehicle, the leaning vehicle including: a vehicle body frame having a head pipe; a left wheel arranged leftward relative to the head pipe; a right wheel arranged rightward relative to the head pipe; a link mechanism that links together the vehicle body frame, the left wheel and the right wheel; a tilt sensor mounted on the vehicle body frame that detects a bank angle of the vehicle body frame; a lean actuator that applies a torque around a rotation axis extending in a vehicle front-rear direction on the vehicle body frame; and a control device that receives a signal from the tilt sensor to control the lean actuator, the method including: executing a self-stand control of controlling the lean actuator so that a detected bank angle, which is the bank angle of the vehicle body frame detected by the tilt sensor, becomes zero; detecting an output torque of the lean actuator; determining the presence/absence of an origin shift of the tilt sensor based on whether or not the detected bank angle is constant and an absolute value of the output torque of the lean actuator is equal to or greater than a predetermined threshold value; when it is determined that there is an origin shift of the tilt sensor, calculating a shift amount ΔP of the tilt sensor based on an output torque of the lean actuator and a predetermined relationship between the output torque of the lean actuator and the shift amount of the tilt sensor; and calibrating an origin position of the tilt sensor from P0 to P0+ΔP, where P0 is the origin position of the tilt sensor.

A method for calibrating a tilt sensor of a leaning vehicle may be a method for calibrating a tilt sensor of a leaning vehicle, the leaning vehicle including: a vehicle body frame having a head pipe; a left wheel arranged leftward relative to the head pipe; a right wheel arranged rightward relative to the head pipe; a link mechanism that links together the vehicle body frame, the left wheel and the right wheel; a tilt sensor mounted on the vehicle body frame that detects a bank angle of the vehicle body frame; a lean actuator that applies a torque around a rotation axis extending in a vehicle front-rear direction on the vehicle body frame; and a control device that receives a signal from the tilt sensor to control the lean actuator, the method including: executing a self-stand control of controlling the lean actuator so that a detected bank angle, which is the bank angle of the vehicle body frame detected by the tilt sensor, becomes zero; detecting an output torque of the lean actuator; determining the presence/absence of an origin shift of the tilt sensor based on whether or not the detected bank angle is constant and an absolute value of the output torque of the lean actuator is equal to or greater than a predetermined threshold value; when it is determined that there is an origin shift of the tilt sensor, changing an origin position of the tilt sensor; executing the self-stand control based on the changed origin position; and repeatedly determining the presence/absence of the origin shift, changing the origin position and executing the self-stand control until it is determined that there is no origin shift.

### Advantageous Effects Of Invention

According to the present invention, it is easy to determine the presence/absence of the origin shift of the tilt sensor in a leaning vehicle. Also, it is easy to calibrate the origin shift of the tilt sensor in a leaning vehicle.

### BRIEF DESCRIPTION OF THE DRAWINGS

FIG. 1 is a left side view of a leaning vehicle according to one embodiment.
FIG. 2 is a left side view of a part of the leaning vehicle.
FIG. 3 is a left side view of a part of the leaning vehicle.
FIG. 4 is a front view of a part of the leaning vehicle.
FIG. 5 is a plan view of a part of the leaning vehicle.
FIG. 6 is a front view of a part of the leaning vehicle when the vehicle body frame is tilted leftward.
FIG. 7 is a schematic front view of the vehicle body frame when a self-stand control is performed in the absence of an origin shift of the IMU.
FIG. 8 is a schematic front view of the vehicle body frame when a self-stand control is performed in the presence of an origin shift of the IMU.
FIG. 9 is a block diagram of a control device.
FIG. 10 is a block diagram of a self-stand control section according to the first embodiment.
FIG. 11 is a diagram showing the relationship between the detected bank angle, the actual bank angle and the shift amount.
FIG. 12 is a map showing the relationship between the output torque of the lean actuator and the shift amount.
FIG. 13 is a flow chart showing determination and calibration of an origin shift of the IMU according to the first embodiment.
FIG. 14 is a block diagram of a self-stand control section according to the second embodiment.
FIG. 15 is a flow chart showing determination and calibration of an origin shift of the IMU according to the second embodiment.
FIG. 16 is a flow chart showing an example of how the origin position is changed.

### DETAILED DESCRIPTION OF THE PREFERRED EMBODIMENTS

### (First embodiment)

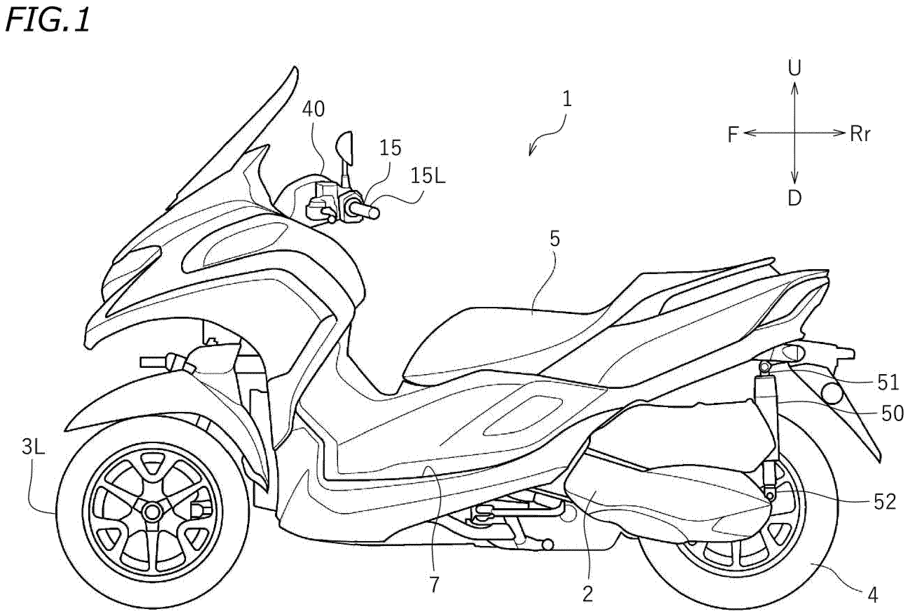

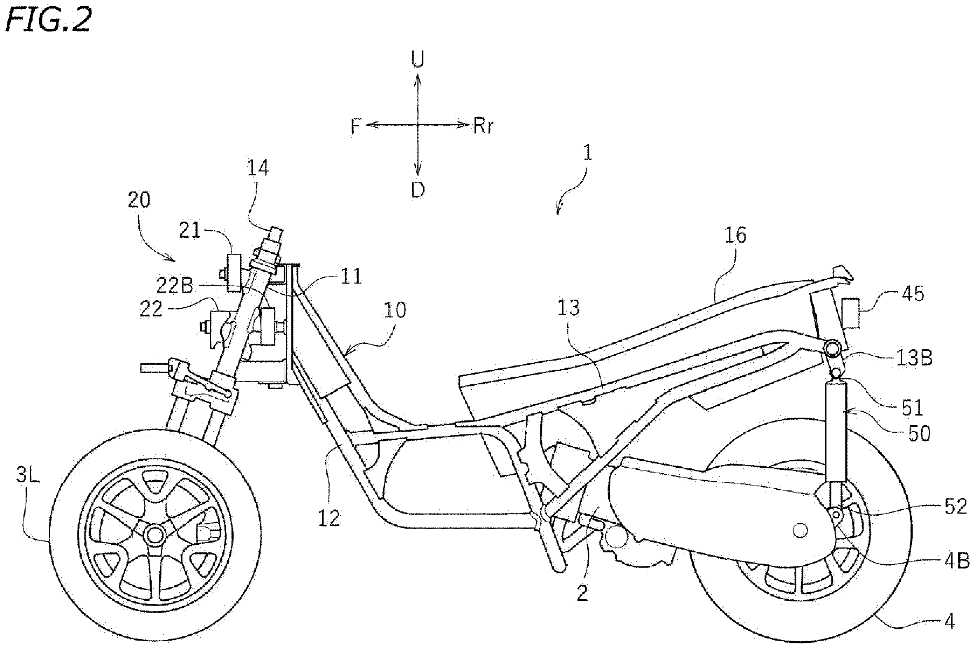

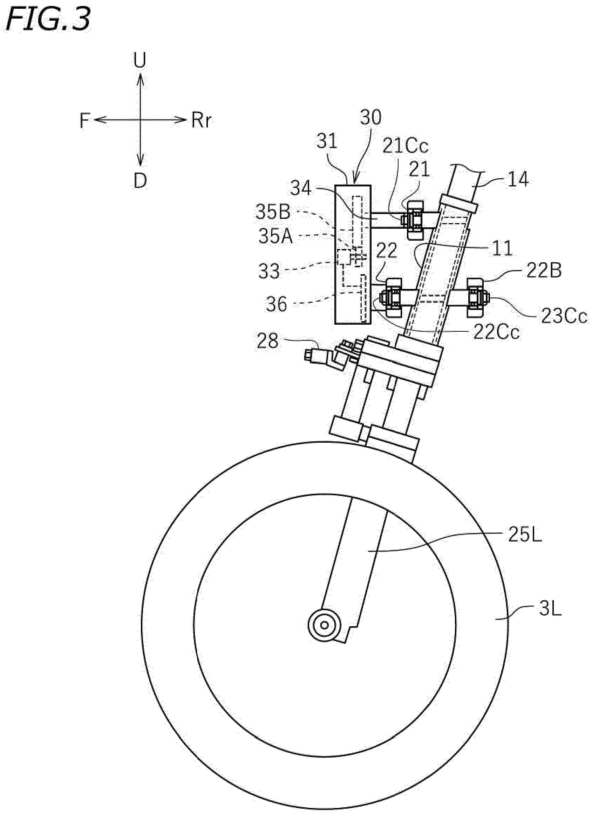

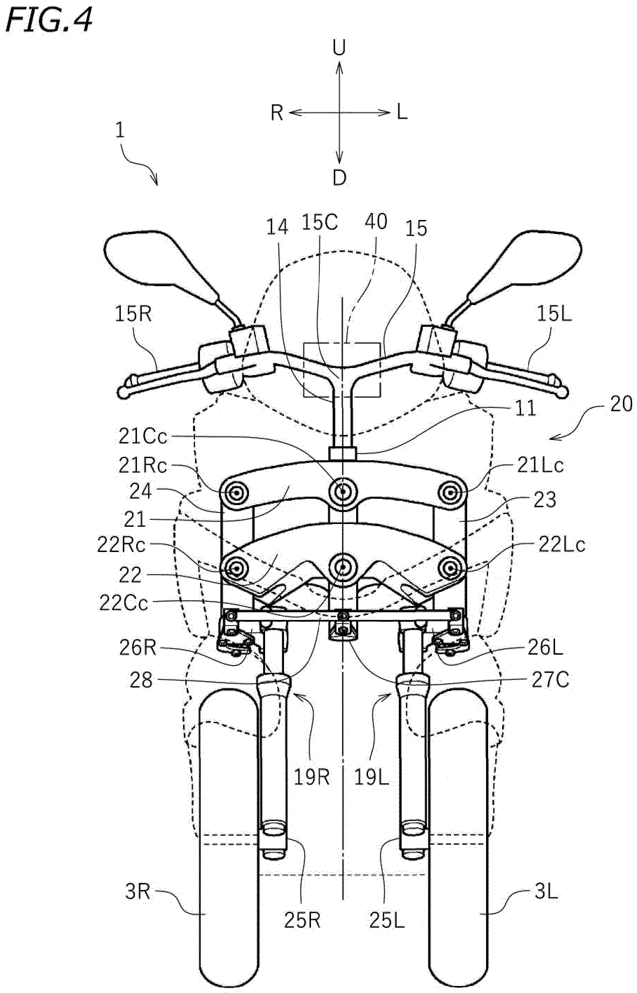

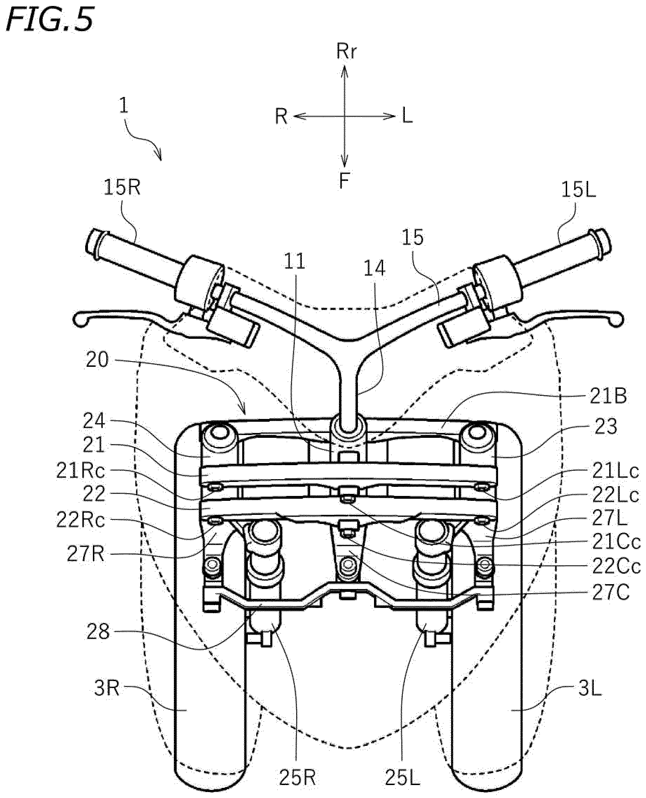

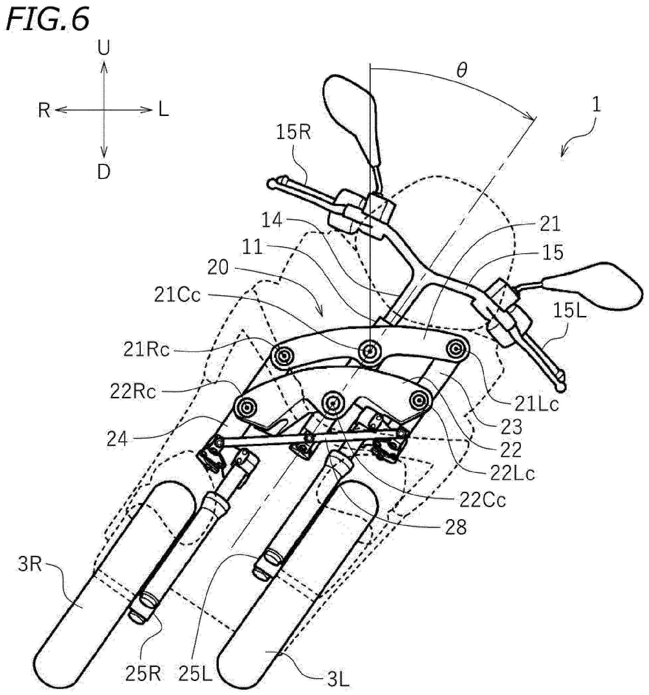

One embodiment of a leaning vehicle will now be described with reference to the drawings. FIG. 1 is a left side view of a leaning vehicle 1 according to the present embodiment. FIG. 2 is a left side view of a part of the leaning vehicle 1. FIG. 3 is a left side view of a part of the leaning vehicle 1. FIG. 4 is a front view of a part of the leaning vehicle 1. FIG. 5 is a plan view of a part of the leaning vehicle 1. FIG. 6 is a front view of a part of the leaning vehicle 1 when the leaning vehicle 1 is tilted leftward.

The terms front, rear, left, right, up and down, as used in the description below, refer to these directions as seen from a virtual rider seated on a seat 5 while the leaning vehicle 1 is standing upright (standing upright as used herein refers to a state where a vehicle body frame 10 to be described below is standing upright) on a horizontal surface with no rider and no load thereon, unless specified otherwise. The designations F, Rr, L, R, U and D, as used in the figures, refer to front, rear, left, right, up and down, respectively.

As shown in FIG. 1 and FIG. 2, the leaning vehicle 1 includes the vehicle body frame 10, a link mechanism 20, a left front wheel 3L, a right front wheel 3R (see FIG. 4), a rear wheel 4, a power unit 2, a seat 5 and a storage box 16. The leaning vehicle 1 is a three-wheel vehicle with two front wheels 3L, 3R and one rear wheel 4.

As shown in FIG. 2, the vehicle body frame 10 includes a head pipe 11, a down frame 12 extending rearward and downward from the head pipe 11, and a seat frame 13 extending rearward from the down frame 12. The seat 5 is supported by the vehicle body frame 10. Herein, the seat 5 is supported by the seat frame 13. The storage box 16 is arranged downward of the seat 5 and is supported by the seat frame 13. As shown in FIG. 4, a steering shaft 14 is rotatably supported by the head pipe 11. A steering handle 15 is fixed to the steering shaft 14. A throttle grip 15R is provided at the right end portion of the steering handle 15, and a left grip 15L is provided at the left end portion of the steering handle 15.

As shown in FIG. 1, the present embodiment of the leaning vehicle 1 is a scooter. The leaning vehicle 1 includes a low footrest 7. The footrest 7 is supported by the vehicle body frame 10. Herein, the footrest 7 is supported by the down frame 12 (see FIG. 2). The footrest 7 is arranged downward of the seat 5. The footrest 7 is a platform for supporting the feet of the rider seated on the seat 5.

As shown in FIG. 4, the link mechanism 20 is a parallelogram link-type link mechanism. The link mechanism 20 is arranged upward relative to the left front wheel 3L and the right front wheel 3R. The link mechanism 20 includes an upper arm 21, a lower arm 22, a left arm 23 and a right arm 24.

The upper arm 21 and the lower arm 22 extend leftward and rightward. The upper arm 21 and the lower arm 22 are examples of link members extending leftward and rightward of the vehicle body frame 10. The lower arm 22 is arranged downward of the upper arm 21. The upper arm 21 and the lower arm 22 are arranged forward of the head pipe 11 (see FIG. 2). The upper arm 21 is rotatably linked to the head pipe 11 by a first central link shaft 21Cc extending in the vehicle front-rear direction. The lower arm 22 is rotatably linked to the head pipe 11 by a second central link shaft 22Cc extending in the vehicle front-rear direction.

In the present embodiment, as shown in FIG. 2, another lower arm 22B is arranged rearward of the head pipe 11. The lower arm 22B extends leftward and rightward. The lower arm 22B is arranged downward of the upper arm 21. The lower arm 22B is rotatably linked to the head pipe 11 by a third central link shaft 23Cc (see FIG. 3) extending in the vehicle front-rear direction. Note that another upper arm (not shown) may be arranged rearward of the head pipe 11, and this upper arm may be rotatably linked to the head pipe 11 by another central link shaft (not shown) extending in the vehicle front-rear direction. Note however that the other upper arm and the other lower arm 22B arranged rearward of the head pipe 11 are optional.

As shown in FIG. 4, the left arm 23 and the right arm 24 extend upward and downward. The left arm 23 is arranged leftward of the head pipe 11 and the right arm 24 is arranged rightward of the head pipe 11. The right arm 24 is arranged rightward of the left arm 23. The left arm 23 and the right arm 24 are arranged rearward of the upper arm 21 and the lower arm 22. The left arm 23 and the right arm 24 are arranged forward of the lower arm 22B. The left arm 23 and the right arm 24 are rotatably linked to the upper arm 21, the lower arm 22 and the lower arm 22B.

Specifically, the upper end portion of the left arm 23 is rotatably linked to the left end portion of the upper arm 21 by a first left link shaft 21Lc extending in the vehicle front-rear direction. The lower end portion of the left arm 23 is rotatably linked to the left end portion of the lower arm 22 by a second left link shaft 22Lc extending in the vehicle front-rear direction. The lower end of the left arm 23 is rotatably linked to the left end portion of the lower arm 22B by a third left link shaft (not shown) extending in the vehicle front-rear direction. The upper end portion of the right arm 24 is rotatably linked to the right end portion of the upper arm 21 by the first right link shaft 21Rc extending in the vehicle front-rear direction. The lower end portion of the right arm 24 is rotatably linked to the right end portion of the lower arm 22 by the second right link shaft 22Rc extending in the vehicle front-rear direction. The lower end portion of the right arm 24 is rotatably linked to the right end portion of the lower arm 22B by a third right link shaft (not shown) extending in the vehicle front-rear direction.

The leaning vehicle 1 includes a left suspension 25L and a right suspension 25R. In the present embodiment, the left suspension 25L and the right suspension 25R are telescopic suspensions. The upper end portion of the left suspension 25L and the upper end portion of the right suspension 25R are connected to the link mechanism 20. The lower end portion of the left suspension 25L is connected to the left front wheel 3L, and the lower portion of the right suspension 25R is connected to the right front wheel 3R. Specifically, the upper end portion of the left suspension 25L is connected to the lower end portion of the left arm 23 via a left bracket 26L. The upper end portion of the left suspension 25L is connected to the left arm 23 so as to be rotatable in the left-right direction of the vehicle body frame 10. The upper end portion of the right suspension 25R is connected to the lower end portion of the right arm 24 via a right bracket 26R. The upper end portion of the right suspension 25R is connected to the right arm 24 so as to be rotatable in the left-right direction of the vehicle body frame 10.

The left suspension 25L, the left bracket 26L and the left arm 23 together form a left wheel support member 19L that supports the left front wheel 3L. The right suspension 25R, the right bracket 26R and the right arm 24 together form a right wheel support member 19R that supports the right front wheel 3R.

A center plate 27C is fixed to the lower end portion of the steering shaft 14. As shown in FIG. 5, the center plate 27C extends forward from the steering shaft 14. A left plate 27L is fixed to the left bracket 26L. A right plate 27R is fixed to the right bracket 26R. The left plate 27L, the center plate 27C and the right plate 27R are linked to a tie rod 28 so as to be rotatable left and right. The steering shaft 14 is linked to the left arm 23 and the right arm 24 via the center plate 27C, the tie rods 28, the left plate 27L and the right plate 27R.

As shown in FIG. 3, the leaning vehicle 1 includes a control unit 30 that controls the bank angle. Note that in the figures other than FIG. 3, the control unit 30 is not shown. The bank angle as used herein is the tilt angle θ (see FIG. 6) of the vehicle body frame 10 from the vertical line. Note that in the present embodiment, the bank angle θ is equal to the angle between the axis of the head pipe 11 and the vertical line as viewed in the vehicle front view. The control unit 30 controls the bank angle of the vehicle body frame 10 by adjusting the rotation of the upper arm 21 and the lower arm 22 relative to the vehicle body frame 10. The control unit 30 is configured to apply a torque to at least one of the upper arm 21 and the lower arm 22. The control unit 30 is connected to at least one of the upper arm 21 and lower arm 22, and to the vehicle body frame 10. In the present embodiment, the control unit 30 is connected to the upper arm 21 and the head pipe 11. Note however that there is no particular limitation thereto, and the control unit 30 may be connected to the lower arm 22 and the head pipe 11.

The control unit 30 includes a case 31, a lean actuator 33, a gear 35A and a gear 35B arranged inside the case 31, and a control device 36 arranged inside the case 31.

The lean actuator 33 is a power source that applies a torque around the first central link shaft 21Cc to the vehicle body frame 10. The lean actuator 33 may apply a torque directly or indirectly to the vehicle body frame 10. In the present embodiment, the lean actuator 33 applies a leftward or rightward torque to the upper arm 21, thereby indirectly applying a rightward or leftward torque to the vehicle body frame 10. In the present embodiment, the lean actuator 33 is an electric motor. Note however that the lean actuator 33 is not limited to an electric motor as long as the lean actuator 33 can generate power.

The lean actuator 33 is connected to the gear 35A, and the gear 35A is meshed with the gear 35B. The gear 35A and the gear 35B together form a decelerator. The gear 35B is fixed to an output shaft 34. The output shaft 34 is a rotating shaft driven by the lean actuator 33 and is connected to the upper arm 21. The torque of the lean actuator 33 is transmitted to the upper arm 21 via the gear 35A, the gear 35B and the output shaft 34. When the lean actuator 33 is driven, a torque around the first central link shaft 21Cc (see FIG. 4) is applied to the upper arm 21. Since the upper arm 21 is linked to the vehicle body frame 10 so as to be rotatable around the first central link shaft 21Cc, when a torque around the first central link shaft 21Cc is applied to the upper arm 21, a torque around the first central link shaft 21Cc is generated in the vehicle body frame 10. Note that while the number of gears interposed between the lean actuator 33 and the output shaft 34 is two in the present embodiment, there is no limitation on the number of gears.

The leaning vehicle 1 includes an IMU (inertial measurement unit) 45 mounted on the vehicle body frame 10 (see FIG. 2). The IMU 45 is an example of a tilt sensor that detects the bank angle of the vehicle body frame 10. In the present embodiment, the IMU 45 is mounted on the rear portion of the vehicle body frame 10. Note however that there is no particular limitation on the location of installation of the IMU 45. The IMU 45 may, for example, be mounted on the front portion of the vehicle body frame 10. The IMU 45 may be mounted directly on the vehicle body frame 10 or mounted indirectly on the vehicle body frame 10 via a part such as a bracket.

The control device 36 is communicatively connected to the IMU 45 via a wire harness (not shown). The control device 36 is configured to receive a signal from the IMU 45 and control the lean actuator 33. The control device 36 is a computer having a CPU, a ROM and a RAM (not shown).

As shown in FIG. 2, a power unit 2 is pivotally supported on the vehicle body frame 10. The power unit 2 is connected to the rear wheel 4 so that power can be transmitted therebetween. The power unit 2 generates driving force for traveling. The power unit 2 provides power to the rear wheel 4. The power unit 2 may include an internal combustion engine or may include an electric motor. In the present embodiment, the power unit 2 includes an internal combustion engine.

The leaning vehicle 1 includes left and right rear suspensions 50. The left rear suspension 50 is arranged leftward of the rear wheel 4 and the right rear suspension 50 is arranged rightward of the rear wheel 4. Each rear suspension 50 includes an upper support portion 51 pivotably supported on the vehicle body frame 10 and a lower support portion 52 pivotably supported on the rear wheel 4. Herein, the upper support portion 51 is pivotably supported on the seat frame 13 via a bracket 13B. The lower support portion 52 is pivotably supported on a bracket 4B mounted on the axle of the rear wheel 4.

With the leaning vehicle 1, it is possible to perform various controls using the control device 36 to control the lean actuator 33. For example, the control device 36 can execute a self-stand control of automatically keeping the vehicle body frame 10 in an upright attitude while the leaning vehicle 1 is stopped. The control performed by the control device 36 is executed based on the bank angle detected by the IMU 45.

Now, when the IMU 45 is directly or indirectly mounted on the vehicle body frame 10, the position of the IMU 45 may shift from the normal position or the attitude of the IMU 45 may tilt from the normal attitude. The mounting part (e.g., a bracket) for mounting the IMU 45 on the vehicle body frame 10 may deteriorate over time. The position or attitude of the IMU 45 may shift from the normal position or attitude due to aging deterioration of the mounting part. If the position or attitude of the IMU 45 shifts, the origin position of the IMU 45 will shift from the normal position. That is, the IMU 45 has an origin shift.

When the IMU 45 has an origin shift, it is not possible to desirably execute a control that is executed based on the detection result of the IMU 45. Therefore, it is important to know whether or not the IMU 45 has an origin shift. Now, in order to determine the presence/absence of an origin shift of the IMU 45, one may consider periodically taking the leaning vehicle 1 to an inspection site, and inspecting the origin shift using an inspection apparatus provided at the inspection site. However, such an inspection takes labor and time.

According to the present embodiment, it is possible to shorten such labor and time. As will be described below, the leaning vehicle 1 according to the present embodiment has a function to determine the presence/absence of an origin shift of the bank angle of the IMU 45. The leaning vehicle 1 also includes a function to automatically calibrate the origin shift of the bank angle of the IMU 45. According to the present embodiment, it is easy to determine the presence/absence of, and calibrate, the origin shift of the bank angle of the IMU 45. Next, the method of determining and calibrating the origin shift of the bank angle of IMU 45 (hereinafter referred to simply as "origin shift") will be described.

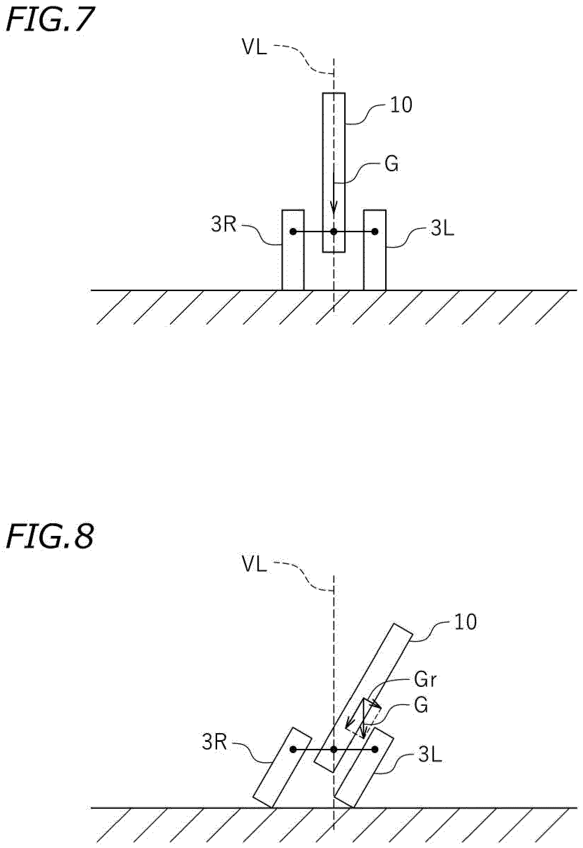

When the IMU 45 has no origin shift, the bank angle detected by the IMU 45 coincides with the actual bank angle of the vehicle body frame 10. Hereafter, the bank angle detected by the IMU 45 will be referred to as the "detected bank angle" and the actual bank angle of the vehicle body frame 10 will be referred to as the "actual bank angle". As schematically shown in FIG. 7, when there is no origin shift, the vehicle body frame 10 stands upright when the self-stand control is executed. Since the gravity G acting on the vehicle body frame 10 acts vertically downward, when the vehicle body frame 10 is standing upright, the gravity G does not act as a torque to tilt the vehicle body frame 10. Therefore, even if the output torque of the lean actuator 33 is relatively small, the lean actuator 33 can maintain the vehicle body frame 10 in an upright attitude. Therefore, when there is no origin shift, the output torque of the lean actuator 33 is kept low.

On the other hand, if there is an origin shift, the detected bank angle does not coincide with the actual bank angle. In the case where there is an origin shift, the detected bank angle becomes zero when the vehicle body frame 10 is tilted from the vertical line VL, as shown with exaggeration in FIG. 8. The control device 36 controls the lean actuator 33 so that the detected bank angle becomes zero during a self-stand control. Therefore, the control device 36 attempts to maintain the vehicle body frame 10 in a tilted attitude. However, when the vehicle body frame 10 is tilted, the gravity G acting on the vehicle body frame 10 acts as a torque that causes the vehicle body frame 10 to tilt. Specifically, the vector component Gr of the gravity G in the direction perpendicular to the vehicle up-down direction of the vehicle body frame 10 acts as a torque that causes the vehicle body frame 10 to tilt. Therefore, the lean actuator 33 needs to output a torque commensurate with the torque to maintain the attitude of the vehicle body frame 10 (in other words, to prevent the vehicle body frame 10 from collapsing). The lean actuator 33 needs to output a relatively large torque. Therefore, in the case where there is an origin shift, the output torque of the lean actuator 33 is relatively large.

Therefore, by executing the self-stand control while the leaning vehicle 1 is stopped, it is possible to determine the presence/absence of an origin shift of the IMU 45 based on the magnitude of the output torque of the lean actuator 33. The present embodiment of the control device 36 includes the following elements for determining the presence/absence of, and calibrate, the origin shift.

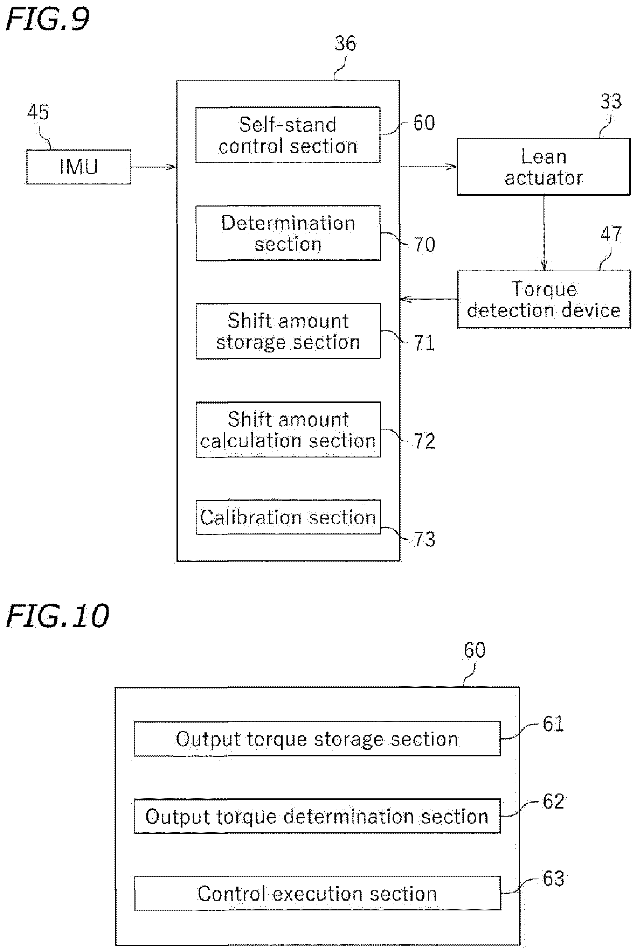

As shown in FIG. 9, the leaning vehicle 1 includes a torque detection device 47 that detects the output torque of the lean actuator 33. Note that it is assumed in the present embodiment that the output torque of the lean actuator 33 is positive when the vehicle body frame 10 is driven rightward and is negative when it is driven leftward. Note however that the positive and negative directions may be reversed. The control device 36 includes a self-stand control section 60 that executes a self-stand control, a determination section 70 that determines the presence/absence of an origin shift, a shift amount storage section 71, a shift amount calculation section 72, and a calibration section 73 that calibrates the origin shift.

The determination section 70 determines presence/absence of an origin shift of the bank angle of the IMU 45 based on whether or not the detected bank angle is constant and the absolute value of the output torque of the lean actuator 33 is equal to or greater than a predetermined threshold value while the self-stand control is being executed. If the absolute value of the output torque is equal to or greater than the threshold value, the determination section 70 determines that there is an origin shift, and if the absolute value of the output torque is less than the threshold value, it is determined that there is no origin shift.

The self-stand control section 60 controls the lean actuator 33 so that the detected bank angle of the IMU 45 becomes zero. When the vehicle body frame 10 tilts, the lean actuator 33 outputs a torque to raise the vehicle body frame 10. Herein, the lean actuator 33 needs to output a larger torque the larger the bank angle of the vehicle body frame 10. The magnitude of the torque that needs to be output by the lean actuator 33 can be determined in advance by testing or calculation based on the bank angle. As shown in FIG. 10, the self-stand control section 60 includes an output torque storage section 61 that stores a predetermined relationship between the detected bank angle and the output torque of the lean actuator 33 (hereinafter referred to as the first relationship). The output torque storage section 61 is, for example, a memory. The self-stand control section 60 includes the output torque determination section 62 and a control execution section 63. The output torque determination section 62 receives a signal from the IMU 45 and determines the output torque of the lean actuator 33 based on the detected bank angle detected by the IMU 45 and the first relationship stored in the output torque storage section 61. The control execution section 63 controls the lean actuator 33 to output the output torque determined by the output torque determination section 62.

The shift amount storage section 71 stores a predetermined relationship between the output torque of the lean actuator 33 and the shift amount of the bank angle of the IMU 45 (hereinafter referred to as the second relationship). The second relationship can be determined, for example, as follows.

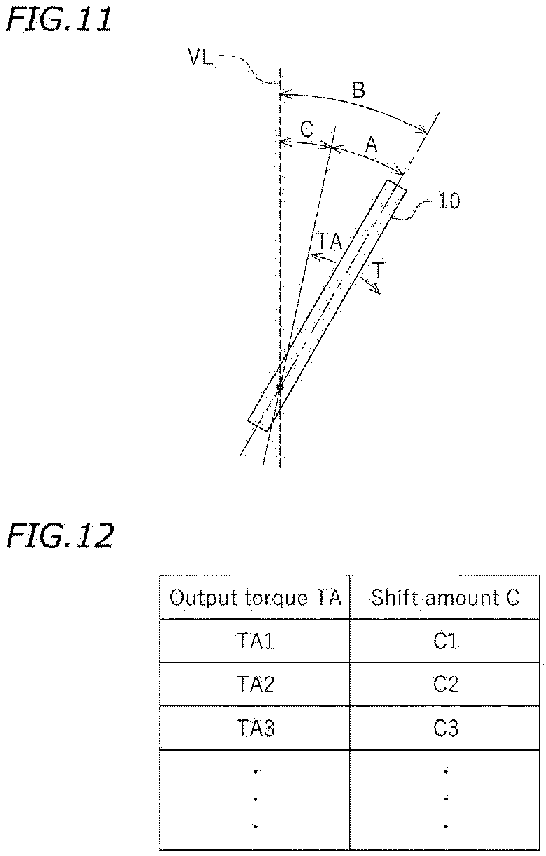

As described above, when the vehicle body frame 10 is tilted, the gravity acting on the vehicle body frame 10 acts as a torque that causes the vehicle body frame 10 to tilt (see FIG. 8). When the vehicle body frame 10 is tilted, a torque around the rotation axis extending in the vehicle front-rear direction is generated on the vehicle body frame 10. While this torque varies in accordance with the actual bank angle of the vehicle body frame 10, it can be determined in advance by testing or calculation. The relationship between the actual bank angle and the torque acting on the vehicle body frame 10 will be referred to as the third relationship. As shown in FIG. 11, T denotes the torque acting on the vehicle body frame 10 due to gravity when the actual bank angle of the vehicle body frame 10 is B.

When the output torque TA of the lean actuator 33 becomes equal to the torque T during the self-stand control, the vehicle body frame 10 stops in the tilted attitude. Then, the detected bank angle detected by the IMU 45 is constant. While the self-stand control is performed, the lean actuator 33 outputs a torque in accordance with the detected bank angle. The output torque of the lean actuator 33 is determined based on the detected bank angle and the first relationship stored in the output torque storage section 61. Herein, based on the first relationship, it is assumed that TA denotes the output torque of the lean actuator 33 when the detected bank angle is A.

Where C denotes the shift amount of the origin of the bank angle of the IMU 45, the actual bank angle B is B=A+C when the detected bank angle is A. Therefore, the shift amount C=B-A. The torque T generated by gravity is equal to the output torque TA of the lean actuator 33. The output torque TA of the lean actuator 33 is detected by the torque detection device 47. Therefore, the torque T due to gravity can be detected by the torque detection device 47. Once the torque T is known, the actual bank angle B can be identified by the torque T and the third relationship. The detected bank angle A can also be identified by the output torque TA of the lean actuator 33 detected by the torque detection device 47 and the first relationship. Therefore, the shift amount C can be identified based on the output torque TA of the lean actuator 33.

Thus, the relationship (the second relationship) between the output torque TA of the lean actuator 33 and the shift amount C can be identified in advance. For example, as shown in FIG. 12, the relationship between the output torque TA and the shift amount C can be stored in advance as a map in the shift amount storage section 71.

The shift amount calculation section 72 calculates the shift amount of the IMU 45 based on the output torque of the lean actuator 33 detected by the torque detection device 47 and the second relationship stored in the shift amount storage section 71 when the determination section 70 determines that there is an origin shift.

The calibration section 73 calibrates the origin position of the bank angle of the IMU 45 from P0 to P0+ΔP, where P0 is the origin position of the bank angle of the IMU 45 and ΔP is the shift amount calculated by the shift amount calculation section 72.

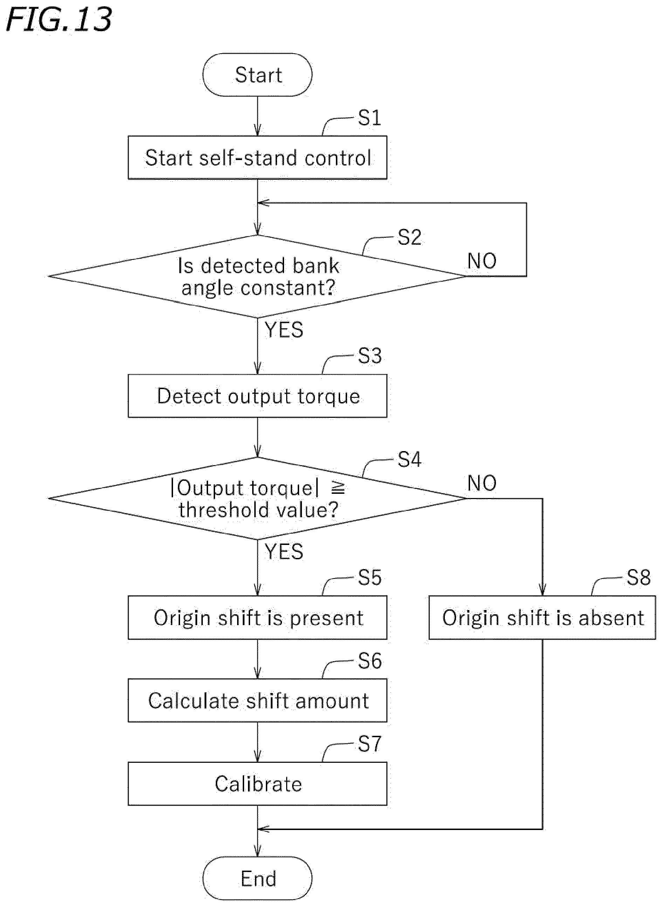

The leaning vehicle 1 is configured as described above. Note that the output torque determination section 62 and the control execution section 63 of the self-stand control section 60, the determination section 70, the shift amount calculation section 72 and the calibration section 73 are generated, for example, by the CPU of a computer executing a computer program. The output torque storage section 61 of the self-stand control section 60 and the shift amount storage section 71 are a memory of a computer, for example. Next, referring to the flow chart of FIG. 13, the method of determining the presence/absence of, and calibrating, the origin shift of the IMU 45 will be described.

The determination of the presence/absence of, and the calibration of, the origin shift are performed while the leaning vehicle 1 is stopped on a horizontal plane. First, in step S1, the self-stand control section 60 starts the self-stand control. Next, in step S2, the determination section 70 determines whether or not the detected bank angle detected by the IMU 45 is constant. The process proceeds to step S3 if the determination result is YES. In step S3, the torque detection device 47 detects the output torque of the lean actuator 33. Note that while step S3 is herein performed after step S2, there is no particular limitation on the order of step S2 and step S3. In step S4, the determination section 70 determines whether or not the absolute value of the output torque is equal to or greater than a threshold value. If the determination result from step S4 is YES, the process proceeds to step S5, and it is determined that there is an origin shift. If the determination result from step S4 is NO, the process proceeds to step S8, and it is determined that there is no origin shift.

If it is determined that there is an origin shift, the process proceeds to step S6. In step S6, the shift amount calculation section 72 calculates the shift amount of the bank angle of the IMU 45 based on the output torque and the second relationship stored in the shift amount storage section 71. Next, the process proceeds to step S7, and the calibration section 73 calibrates the origin position from P0 to P0+ΔP, where P0 is the origin position of the bank angle of the IMU 45 and ΔP is the shift amount.

Thus, the bank angle of the IMU 45 is automatically calibrated. Then, the leaning vehicle 1 can execute various controls using the calibrated IMU 45.

As described above, according to the present embodiment, by executing the self-stand control while the leaning vehicle 1 is stopped, it is possible to determine the presence/absence of the origin shift of the bank angle of the IMU 45 based on the magnitude of the output torque of the lean actuator 33. There is no need to bring the leaning vehicle 1 to an inspection site where an inspection apparatus is installed in order to determine the presence/absence of the origin shift of the IMU 45. No special inspection apparatus is needed to determine the presence/absence of the origin shift of the IMU 45. According to the present embodiment, it is possible to easily determine the origin shift of the IMU 45.

According to the present embodiment, the control device 36 includes the shift amount storage section 71 and the shift amount calculation section 72. The shift amount storage section 71 stores a predetermined relationship (second relationship) between the output torque of the lean actuator 33 and the shift amount of the IMU 45. When it is determined by the determination section 70 that there is an origin shift, the shift amount calculation section 72 calculates the shift amount of the IMU 45 based on the output torque of the lean actuator 33 and the second relationship. According to the present embodiment, it is possible to quickly calculate the shift amount of the IMU 45.

According to the present embodiment, the calibration section 73 calibrates the origin position of the IMU 45 after the shift amount calculation section 72 calculates the shift amount. Therefore, it is possible to automatically calibrate the origin shift of the bank angle of the IMU 45.

### (Second embodiment)

In the embodiment described above, the shift amount calculation section 72 calculates the shift amount, and the calibration section 73 calibrates the origin position of the IMU 45 based on the shift amount. However, the shift amount calculation section 72 may be optional. The second embodiment to be described below is similar to the first embodiment but with a change to the method of calibrating the origin position.

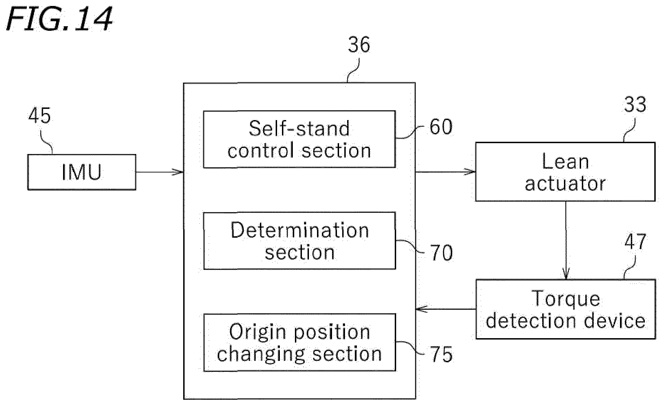

As shown in FIG. 14, the control device 36 according to the second embodiment includes the origin position changing section 75 instead of the shift amount storage section 71, the shift amount calculation section 72 and the calibration section 73. If it is determined by the determination section 70 that there is an origin shift, the origin position changing section 75 changes the origin position of the IMU 45. The origin position changing section 75 repeatedly changes the origin position until it is determined by the determination section 70 that there is no origin shift. Note that the origin position changing section 75 is generated, for example, by the CPU of a computer executing a computer program.

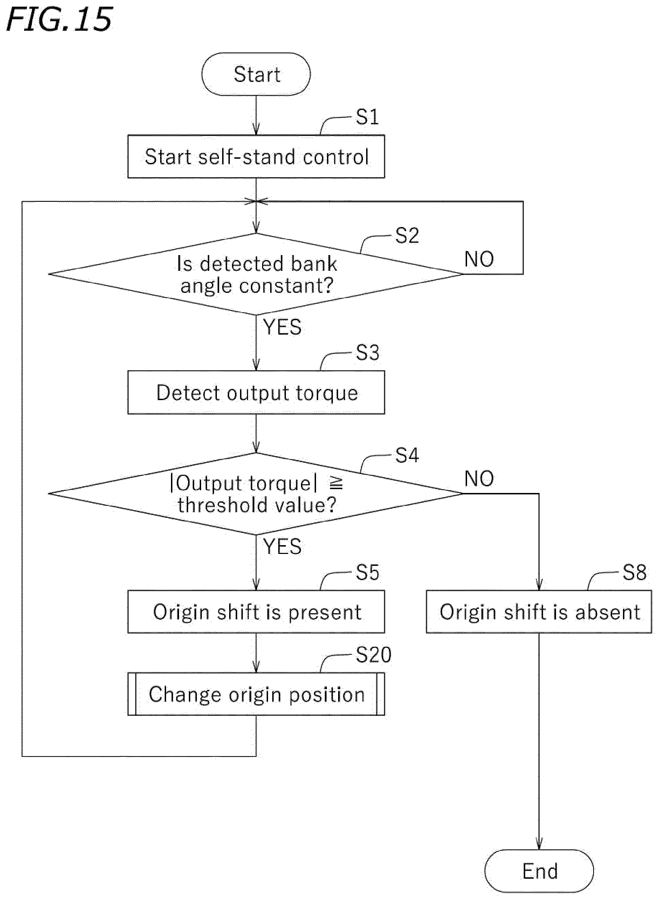

FIG. 15 is a flow chart showing a method of calibrating the origin shift according to the second embodiment. Steps S1 to S5 and S8 are similar to those in the first embodiment. In the present embodiment, after it is determined in step S5 that there is an origin shift, the process proceeds to step S20, and the origin position is changed by the origin position changing section 75. After the origin position is changed, the process returns to step S2, repeating the processes of step S2 and thereafter. In step S4, it is again determined whether or not the absolute value of the output torque of the lean actuator 33 is equal to or greater than a threshold value based on the changed origin position. If the output torque is equal to or greater than the threshold value, it is determined in step S5 that there is an origin shift and the process again proceeds to step S20. Thereafter, this process is repeated until it is determined that there is no origin shift (step S8).

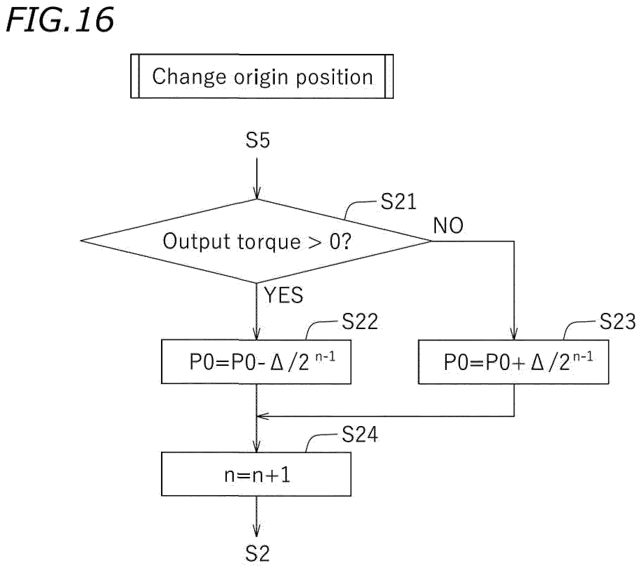

Changing the origin position in step S20 can be done as follows, for example. As shown in FIG. 16, in the present embodiment, after step S5, it is determined in step S21 whether or not the output torque of the lean actuator 33 is greater than 0. Note that it is assumed also in the present embodiment that the output torque of the lean actuator 33 is positive when the vehicle body frame 10 is driven rightward and is negative when it is driven leftward. When the vehicle body frame 10 is tilted leftward relative to the vertical line, the lean actuator 33 drives the vehicle body frame 10 rightward, so the output torque is greater than 0. When the vehicle body frame 10 is tilted rightward relative to the vertical line, the lean actuator 33 drives the vehicle body frame 10 leftward, so the output torque is less than 0.

If the output torque is greater than 0 as a result of determination of step S21, the process proceeds to step S22. In step S22, the origin position P0 is changed to P0-Δ/2n-1. Note that Δ is a predetermined constant, and n represents the number of repetitions of step S20. Since n=1 when executing step S20 for the first time, the origin position P0 is changed to P0-Δ. If the output torque is smaller than 0 as a result of determination of step S21, the process proceeds to step S23. In step S23, the origin position P0 is changed to P0+Δ/2n-1.

After step S22 or S23, the process proceeds to step S24, adding 1 to the number of repetitions. That is, n is changed to n+1. Then, the process returns to step S4.

This is an example of a specific process of step S20. Note however that the process is merely an example, and there is no particular limitation on the specific process of step S20.

Also in the present embodiment, it is possible to automatically calibrate the origin shift of the bank angle of the IMU 45. According to the present embodiment, the shift amount storage section 71 and the shift amount calculation section 72 are not necessary.

### (Other embodiments)

While the first and second embodiments have been described above, the embodiments are merely illustrative. Various other embodiments are possible.

The tilt sensor for detecting the bank angle of the vehicle body frame 10 is not limited to the IMU 45.

The control device 36 does not need to be arranged inside the control unit 30. The position of the control device 36 is not limited to the front portion of the leaning vehicle 1. While the control device 36 may be separate from the control device for controlling the power unit 2, the control device 36 may be integral with the control device.

With the error detection method according to the embodiments described above, the determination of the presence/absence of the origin shift of the IMU 45 is performed by the control device 36, but the determination of the presence/absence of the origin shift may be performed by a person. For example, a maintenance personnel of the leaning vehicle 1 may determine the presence/absence of the origin shift of the IMU 45 based on whether or not the detected bank angle is constant and the absolute value of the output torque of the lean actuator 33 is equal to or greater than a threshold value. When a maintenance personnel, etc., performs the determination, the second relationship described above does not need to be stored in the computer and may be described, for example, in the operation manual. The maintenance personnel, etc., may perform the determination while referring to the operation manual. Although the calibration method of the embodiments described above is performed by the control device 36, it may be performed by a person such as a maintenance personnel. For example, in the first embodiment, a maintenance personnel, etc., may perform the calibration while referring to the operation manual in which the third relationship is described. In the second embodiment, a maintenance personnel, etc., may change the origin position while visually observing the condition of the leaning vehicle 1.

The leaning vehicle is not limited to a three-wheeled vehicle having the left front wheel 3L, the right front wheel 3R and the rear wheel 4. The leaning vehicle may be a three-wheeled vehicle including a front wheel, a left rear wheel and a right rear wheel. The leaning vehicle is not limited to a scooter. The leaning vehicle may be a straddled vehicle other than a scooter. Note that a straddled vehicle is a vehicle to be straddled by a rider.

### Reference Signs List

1: Leaning vehicle, 3L: Left front wheel (left wheel), 3R: Right front wheel (right wheel), 10: Vehicle body frame, 11: Head pipe, 19L: Left wheel support member, 19R: Right wheel support member, 20: Link mechanism, 21: Link member, 21Cc: First central link shaft (central link shaft), 21Lc: First left link shaft (left link shaft), 21Rc: First right link shaft (right link shaft), 33: Lean actuator, 36: Control device, 45: IMU (tilt sensor), 47: Torque detection device, 60: Self-stand control section, 61: Output torque storage section, 62: Output torque determination section, 63: Control execution section, 70: Determination section, 71: Shift amount storage section, 72: Shift amount calculation section, 73: Calibration section, 75: Origin position changing section

## Claims

1. A leaning vehicle (1), comprising:
a vehicle body frame (10) having a head pipe (11);
a left wheel (3L) arranged leftward relative to the head pipe (11);
a right wheel (3R) arranged rightward relative to the head pipe (11);
a link mechanism (20) that links together the vehicle body frame (10), the left wheel (3L) and the right wheel (3R);
a tilt sensor (45) mounted on the vehicle body frame (10) that is configured to detect a bank angle (θ) of the vehicle body frame (10);
a lean actuator (33) that is configured to apply a torque around a rotation axis extending in a vehicle front-rear direction on the vehicle body frame (10);
a control device (36) that is configured to receive a signal from the tilt sensor (45) to control the lean actuator (33); and
a torque detection device (47) that is configure to detect an output torque of the lean actuator (33),
wherein the control device (36) includes:
a self-stand control section (60) that is configured to execute a self-stand control of controlling the lean actuator (33) so that a detected bank angle (θ), which is the bank angle (θ) of the vehicle body frame (10) detected by the tilt sensor (45), becomes zero; and
a determination section (70) that is configured to determine the presence/absence of an origin shift of the tilt sensor (45) based on whether or not the detected bank angle (θ) is constant and an absolute value of the output torque of the lean actuator (33) is equal to or greater than a predetermined threshold value while the self-stand control is executed.

2. The leaning vehicle (1) according to claim 1, wherein the control device (36) includes:
a shift amount storage section (71) that is configured to store a predetermined relationship between the output torque of the lean actuator (33) and a shift amount of the origin of the tilt sensor (45); and
a shift amount calculation section (72) that is configured to calculate the shift amount of the origin of the tilt sensor (45) based on the output torque of the lean actuator (33) detected by the torque detection device (47) and the relationship between the output torque of the lean actuator (33) and a shift amount of the origin of the tilt sensor (45) stored in the shift amount storage section (71) if it is determined by the determination section (70) that there is an origin shift of the tilt sensor (45).

3. The leaning vehicle (1) according to claim 2, wherein the self-stand control section (60) includes:
an output torque storage section (61) that is configured to store a predetermined relationship between the detected bank angle (θ) and the output torque of the lean actuator (33);
an output torque determination section (62) that is configured to determine the output torque of the lean actuator (33) based on the detected bank angle (θ) detected by the tilt sensor (45) and the relationship between the detected bank angle (θ) and the output torque of the lean actuator (33) stored in the output torque storage section (61); and
a control execution section (63) that is configured to control the lean actuator (33) so as to output the output torque determined by the output torque determination section (62);
the relationship between the output torque of the lean actuator (33) and a shift amount of the origin of the tilt sensor (45) stored in the shift amount storage section (71) is such a relationship that a shift amount C of the origin of the tilt sensor (45) is C=B-A when the output torque of the lean actuator (33) is T, where
T is a torque around the rotation axis of the vehicle body frame (10) that is generated by gravity and acts upon the vehicle body frame (10) when the bank angle (θ) of the vehicle body frame (10) is B; and
in the relationship between the detected bank angle (θ) and the output torque of the lean actuator (33) stored in the output torque storage section (61), A is the detected bank angle (θ) when the output torque of the lean actuator (33) is T.

4. The leaning vehicle (1) according to claim 2 or 3, wherein the control device (36) includes a calibration section (73) that is configured to calibrate an origin position of the tilt sensor (45) from P0 to P0+ΔP, where P0 is the origin position of the tilt sensor (45) and ΔP is the shift amount of the origin of the tilt sensor (45) calculated by the shift amount calculation section (72).

5. The leaning vehicle (1) according to claim 1, wherein the control device (36) includes an origin position changing section (75) that is configured to change an origin position of the tilt sensor (45) when it is determined by the determination section (70) that there is an origin shift of the tilt sensor (45);
the self-stand control section (60) is configured to execute the self-stand control based on the changed origin position of the tilt sensor (45) after the origin position changing section (75) changes the origin position of the tilt sensor (45); and
the origin position changing section (75) is configured to repeat changing the origin position of the tilt sensor (45) until it is determined by the determination section (70) that there is no origin shift of the tilt sensor (45).

6. The leaning vehicle (1) according to at least one of the claims 1 to 5, wherein the link mechanism (20) includes:
a left wheel support member (19L) that supports the left wheel (3L);
a right wheel support member (19R) arranged rightward of the left wheel support member (19L) that supports the right wheel (3R);
a link member (21) extending leftward and rightward of the vehicle body frame (10);
a central link shaft (21Cc) extending in the vehicle front-rear direction that rotatably links the vehicle body frame (10) to the link member (21);
a left link shaft (21Lc) extending in the vehicle front-rear direction that rotatably links the left wheel support member (19L) to the link member (21); and
a right link shaft (21Rc) extending in the vehicle front-rear direction that rotatably links the right wheel support member (19R) to the link member (21); and
the lean actuator (33) is configured to apply a torque around the central link shaft (21Cc) on the vehicle body frame (10).

7. The leaning vehicle (1) according to at least one of the claims 1 to 6, wherein the tilt sensor (45) is an inertial measurement unit (IMU) provided on the vehicle body frame (10).

8. A method for detecting an error in a tilt sensor (45) of a leaning vehicle (1), the leaning vehicle (1) comprising:
a vehicle body frame (10) having a head pipe (11);
a left wheel (3L) arranged leftward relative to the head pipe (11);
a right wheel (3R) arranged rightward relative to the head pipe (11);
a link mechanism (20) that links together the vehicle body frame (10), the left wheel (3L) and the right wheel (3R);
a tilt sensor (45) mounted on the vehicle body frame (10) that detects a bank angle (θ) of the vehicle body frame (10); and
a lean actuator (33) that applies a torque around a rotation axis extending in a vehicle front-rear direction on the vehicle body frame (10); the method comprising:
receiving a signal from the tilt sensor (45) to control the lean actuator (33),
executing a self-stand control of controlling the lean actuator (33) so that a detected bank angle (θ), which is the bank angle (θ) of the vehicle body frame (10) detected by the tilt sensor (45), becomes zero;
detecting an output torque of the lean actuator (33); and
determining the presence/absence of an origin shift of the tilt sensor (45) based on whether or not the detected bank angle (θ) is constant and an absolute value of the output torque of the lean actuator (33) is equal to or greater than a predetermined threshold value.

9. A method for calibrating a tilt sensor (45) of a leaning vehicle (1) comprising:
the method for detecting an error in a tilt sensor (45) of a leaning vehicle (1) according to claim 8, wherein the method further comprises:
when it is determined that there is an origin shift of the tilt sensor (45), calculating a shift amount ΔP of the origin of the tilt sensor (45) based on an output torque of the lean actuator (33) and a predetermined relationship between the output torque of the lean actuator (33) and the shift amount of the origin of the tilt sensor (45); and
calibrating an origin position of the tilt sensor (45) from P0 to P0+ΔP, where P0 is the origin position of the tilt sensor (45), or
when it is determined that there is an origin shift of the tilt sensor (45), changing an origin position of the tilt sensor (45);
executing the self-stand control based on the changed origin position of the tilt sensor (45); and
repeatedly determining the presence/absence of the origin shift of the tilt sensor (45), changing the origin position of the tilt sensor (45) and executing the self-stand control until it is determined that there is no origin shift of the tilt sensor (45).

## Patentansprüche

1. Ein Neige-Fahrzeug (1), das umfasst:
einen Fahrzeugkörperrahmen (10) mit einem Kopfrohr (11);
ein linkes Rad (3L), das in Bezug auf das Kopfrohr (11) nach links angeordnet ist;
ein rechtes Rad (3R), das in Bezug auf das Kopfrohr (11) nach rechts angeordnet ist;
einen Lenkermechanismus (20), der den Fahrzeugkörperrahmen (10), das linke Rad (3L) und das rechte Rad (3R) miteinander verbindet;
einen Neigungssensor (45), der an dem Fahrzeugkörperrahmen (10) angebracht ist und so konfiguriert ist, dass er einen Neigungswinkel (θ) des Fahrzeugkörperrahmens (10) erfasst;
einen Schräglagenaktuator (33), der so konfiguriert ist, dass er ein Drehmoment um eine Drehachse, die sich in einer Fahrzeug-Vorder-Rück-Richtung erstreckt, auf den Fahrzeugkörperrahmen (10) ausübt;
eine Steuervorrichtung (36), die so konfiguriert ist, dass sie ein Signal von dem Neigungssensor (45) empfängt, um das Schräglagenaktuator (33) zu steuern; und
eine Drehmomenterfassungsvorrichtung (47), die so konfiguriert ist, dass sie ein Ausgangsdrehmoment des Schräglagenaktuators (33) erfasst,
wobei die Steuervorrichtung (36) umfasst:
einen Selbststand-Steuerungsabschnitt (60), der so konfiguriert ist, dass er eine Selbststand-Steuerung zur Steuerung des Schräglagenaktuators (33) ausführt, so dass ein erfasster Neigungswinkel (θ), der der vom Neigungssensor (45) erfasste Neigungswinkel (θ) des Fahrzeugkörperrahmens (10) ist, Null wird; und
einen Bestimmungsabschnitt (70), der so konfiguriert ist, dass er das Vorhandensein/Nichtvorhandensein einer Ursprungsverschiebung des Neigungssensors (45) basierend darauf bestimmt, ob der erfasste Neigungswinkel (θ) konstant ist oder nicht und ein absoluter Wert des Ausgangsdrehmoments des Schräglagenaktuators (33) gleich oder größer als ein vorbestimmter Schwellenwert ist, während die Selbststandsteuerung ausgeführt wird.

2. Das Neige-Fahrzeug (1) nach Anspruch 1, wobei die Steuervorrichtung (36) umfasst:
einen Verschiebungsbetragsspeicherabschnitt (71), der so konfiguriert ist, dass er eine vorbestimmte Beziehung zwischen dem Ausgangsdrehmoment des Schräglagenaktuators (33) und einem Verschiebungsbetrag des Ursprungs des Neigungssensors (45) speichert; und
einen Verschiebungsbetragsberechnungsabschnitt (72), der so konfiguriert ist, dass er den Verschiebungsbetrag des Ursprungs des Neigungssensors (45) auf der Grundlage des Ausgangsdrehmoments des Schräglagenaktuators (33), das von der Drehmomenterfassungsvorrichtung (47) erfasst wird, und der Beziehung zwischen dem Ausgangsdrehmoment des Schräglagenaktuators (33) und einem Verschiebungsbetrag des Ursprungs des Neigungssensors (45), der in dem Verschiebungsbetragsspeicherabschnitt (71) gespeichert ist, berechnet, wenn von dem Bestimmungsabschnitt (70) festgestellt wird, dass eine Ursprungsverschiebung des Neigungssensors (45) vorliegt.

3. Das Neige-Fahrzeug (1) nach Anspruch 2, wobei der Selbststand-Steuerungsabschnitt (60) umfasst:
einen Ausgangsdrehmoment-Speicherabschnitt (61), der so konfiguriert ist, dass er eine vorbestimmte Beziehung zwischen dem erfassten Neigungswinkel (θ) und dem Ausgangsdrehmoment des Schräglagenaktuators (33) speichert;
einen Ausgangsdrehmoment-Bestimmungsabschnitt (62), der so konfiguriert ist, dass er das Ausgangsdrehmoment des Schräglagenaktuators (33) auf der Grundlage des vom Neigungssensor (45) erfassten Neigungswinkels (θ) und der Beziehung zwischen dem erfassten Neigungswinkel (θ) und dem im Ausgangsdrehmoment-Speicherabschnitt (61) gespeicherten Ausgangsdrehmoment des Schräglagenaktuators (33) bestimmt; und
einen Steuerausführungsabschnitt (63), der so konfiguriert ist, dass er den Schräglagenaktuator (33) so steuert, dass er das von dem Ausgangsdrehmomentbestimmungsabschnitt (62) bestimmte Ausgangsdrehmoment ausgibt;
die Beziehung zwischen dem Ausgangsdrehmoment des Schräglagenaktuators (33) und einem Verschiebungsbetrag des Ursprungs des Neigungssensors (45), der in dem Verschiebungsbetragsspeicherabschnitt (71) gespeichert ist, eine solche Beziehung ist, dass ein Verschiebungsbetrag C des Ursprungs des Neigungssensors (45) C=B-A ist, wenn das Ausgangsdrehmoment des Schräglagenaktuators (33) T ist, wobei
T ein Drehmoment um die Drehachse des Fahrzeugkörperrahmens (10) ist, das durch die Schwerkraft erzeugt wird und auf den Fahrzeugkörperrahmen (10) wirkt, wenn der Neigungswinkel (θ) des Fahrzeugkörperrahmens (10) B ist; und
in der Beziehung zwischen dem erfassten Neigungswinkel (θ) und dem im Ausgangsdrehmoment-Speicherabschnitt (61) gespeicherten Ausgangsdrehmoment des Schräglagenaktuators (33) ist A der erfasste Neigungswinkel (θ), wenn das Ausgangsdrehmoment des Schräglagenaktuators (33) T ist.

4. Das Neige-Fahrzeug (1) nach Anspruch 2 oder 3, wobei die Steuervorrichtung (36) einen Kalibrierungsabschnitt (73) enthält, der so konfiguriert ist, dass er eine Ursprungsposition des Neigungssensors (45) von P0 auf P0+ΔP kalibriert, wobei P0 die Ursprungsposition des Neigungssensors (45) ist und ΔP der Verschiebungsbetrag des Ursprungs des Neigungssensors (45) ist, der von dem Verschiebungsbetragsberechnungsabschnitt (72) berechnet wird.

5. Das Neige-Fahrzeug (1) nach Anspruch 1, wobei die Steuervorrichtung (36) einen Ursprungspositionsänderungsabschnitt (75) aufweist, der so konfiguriert ist, dass er eine Ursprungsposition des Neigungssensors (45) ändert, wenn durch den Bestimmungsabschnitt (70) festgestellt wird, dass eine Ursprungsverschiebung des Neigungssensors (45) vorliegt;
der Selbststand-Steuerabschnitt (60) so konfiguriert ist, dass er die Selbststand-Steuerung auf der Grundlage der geänderten Ursprungsposition des Neigungssensors (45) ausführt, nachdem der UrsprungspositionsÄnderungsabschnitt (75) die Ursprungsposition des Neigungssensors (45) geändert hat; und
der Ursprungspositionsänderungsabschnitt (75) so konfiguriert ist, dass er die Ursprungsposition des Neigungssensors (45) wiederholt ändert, bis durch den Bestimmungsabschnitt (70) festgestellt wird, dass es keine Ursprungsverschiebung des Neigungssensors (45) gibt.

6. Das Neige-Fahrzeug (1) nach zumindest einem der Ansprüche 1 bis 5, wobei der Lenkermechanismus (20) umfasst:
ein linkes Radträgerelement (19L), das das linke Rad (3L) trägt;
ein rechtes Radträgerelement (19R), das rechts von dem linken Radträgerelement (19L) angeordnet ist und das rechte Rad (3R) trägt;
ein Lenkerelement (21), das sich links und rechts vom Fahrzeugkörperrahmen (10) erstreckt;
eine zentrale Lenkerwelle (21Cc), die sich in der Fahrzeug-Vorder-Rück-Richtung erstreckt und den Fahrzeugkörperrahmen (10) drehbar mit dem Lenkerelement (21) verbindet;
eine linke Lenkerwelle (21Lc), die sich in der Fahrzeug-Vorder-Rück-Richtung erstreckt und das linke Radträgerelement (19L) drehbar mit dem Lenkerelement (21) verbindet; und
eine rechte Lenkerwelle (21Rc), die sich in der Fahrzeug-Vorder-Rück-Richtung erstreckt und das rechte Radträgerelement (19R) drehbar mit dem Lenkerelement (21) verbindet; und
der Schräglagenaktuator (33) so konfiguriert ist, dass er ein Drehmoment um die zentrale Lenkerwelle (21Cc) auf den Fahrzeugkörperrahmen (10) ausübt.

7. Das Neige-Fahrzeug (1) nach zumindest einem der Ansprüche 1 bis 6, wobei der Neigungssensor (45) eine am Fahrzeugkörperrahmen (10) vorgesehene Inertialmesseinheit (IMU) ist.

8. Ein Verfahren zum Erkennen eines Fehlers in einem Neigungssensor (45) eines Neige-Fahrzeugs (1), wobei das Neige-Fahrzeug (1) umfasst:
einen Fahrzeugkörperrahmen (10) mit einem Kopfrohr (11);
ein linkes Rad (3L), das in Bezug auf das Kopfrohr (11) nach links angeordnet ist;
ein rechtes Rad (3R), das in Bezug auf das Kopfrohr (11) nach rechts angeordnet ist;
einen Lenkermechanismus (20), der den Fahrzeugkörperrahmen (10), das linke Rad (3L) und das rechte Rad (3R) miteinander verbindet;
einen Neigungssensor (45), der an dem Fahrzeugkörperrahmen (10) angebracht ist und einen Neigungswinkel (θ) des Fahrzeugkörperrahmens (10) erfasst; und
einen Schräglagenaktuator (33), der ein Drehmoment um eine Drehachse, die sich in einer Fahrzeug-Vorder-Rück-Richtung erstreckt, auf den Fahrzeugkörperrahmen (10) ausübt; wobei das Verfahren umfasst:
Empfangen eines Signals vom Neigungssensor (45), um den Schräglagenaktuator (33) zu steuern,
Ausführen einer Selbststandsteuerung zum Steuern des Schräglagenaktuators (33), so dass ein erfasster Neigungswinkel (θ), der der vom Neigungssensor (45) erfasste Neigungswinkel (θ) des Fahrzeugkörperrahmens (10) ist, Null wird;
Erfassen eines Ausgangsdrehmoments des Schräglagenaktuators (33); und
Bestimmen des Vorhandenseins/Nichtvorhandenseins einer Nullpunktverschiebung des Neigungssensors (45) basierend darauf, ob der erfasste Neigungswinkel (θ) konstant ist oder nicht und ein absoluter Wert des Ausgangsdrehmoments des Schräglagenaktuators (33) gleich oder größer als ein vorbestimmter Schwellenwert ist.

9. Ein Verfahren zum Kalibrieren eines Neigungssensors (45) eines Neige-Fahrzeugs (1), umfassend:
Verfahren zum Erkennen eines Fehlers in einem Neigungssensor (45) eines Neige-Fahrzeugs (1) nach Anspruch 8, wobei das Verfahren weiterhin umfasst:
wenn festgestellt wird, dass es eine Nullpunktverschiebung des Neigungssensors (45) gibt, Berechnen eines Verschiebungsbetrags ΔP des Nullpunkts des Neigungssensors (45) auf der Grundlage eines Ausgangsdrehmoments des Schräglagenaktuators (33) und einer vorgegebenen Beziehung zwischen dem Ausgangsdrehmoment des Schräglagenaktuators (33) und dem Verschiebungsbetrag des Nullpunkts des Neigungssensors (45); und
Kalibrieren einer Ursprungsposition des Neigungssensors (45) von P0 bis P0+ΔP, wobei P0 die Ursprungsposition des Neigungssensors (45) ist, oder
wenn festgestellt wird, dass es eine Nullpunktverschiebung des Neigungssensors (45) gibt, Änderung einer Nullpunktposition des Neigungssensors (45);
Ausführen der Selbststandsteuerung auf der Grundlage der geänderten Ausgangsposition des Neigungssensors (45); und
wiederholtes Bestimmen des Vorhandenseins/Nichtvorhandenseins der Nullpunktverschiebung des Neigungssensors (45), Ändern der Nullpunktposition des Neigungssensors (45) und Ausführen der Selbststandsteuerung, bis festgestellt wird, dass es keine Nullpunktverschiebung des Neigungssensors (45) gibt.

## Revendications

1. Véhicule inclinable (1) comprenant :
un châssis de carrosserie de véhicule (10) ayant un tube de tête (11) ;
une roue gauche (3L) agencée à gauche par rapport au tube de tête (11) ;
une roue droite (3R) agencée à droite par rapport au tube de tête (11) ;
un mécanisme de liaison (20) qui relie ensemble le châssis de carrosserie de véhicule (10), la roue gauche (3L) et la roue droite (3R) ;
un capteur d'inclinaison (45) monté sur le châssis de carrosserie de véhicule (10) qui est configuré pour détecter un angle d'inclinaison (θ) du châssis de carrosserie de véhicule (10) ;
un actionneur d'inclinaison (33) qui est configuré pour appliquer un couple autour d'un axe de rotation s'étendant dans la direction avant-arrière du véhicule sur le châssis de carrosserie de véhicule (10) ;
un dispositif de commande (36) qui est configuré pour recevoir un signal du capteur d'inclinaison (45) afin de commander l'actionneur d'inclinaison (33) ; et
un dispositif de détection de couple (47) qui est configuré pour détecter un couple de sortie de l'actionneur d'inclinaison (33),
dans lequel le dispositif de commande (36) comprend :
une section de commande autonome (60) qui est configurée pour exécuter une commande autonome consistant à commander l'actionneur d'inclinaison (33) de sorte qu'un angle d'inclinaison latérale détecté (θ), qui est l'angle d'inclinaison latérale (θ) du châssis de carrosserie de véhicule (10) détecté par le capteur d'inclinaison (45), devienne nul ; et
une section de détermination (70) qui est configurée pour déterminer la présence/l'absence d'un décalage d'origine du capteur d'inclinaison (45) selon que l'angle d'inclinaison latérale détecté (θ) est constant ou non et que la valeur absolue du couple de sortie de l'actionneur d'inclinaison (33) est supérieure ou égale à une valeur seuil prédéterminée pendant l'exécution de la commande autonome.

2. Véhicule inclinable (1) selon la revendication 1, dans lequel le dispositif de commande (36) comprend :
une section de stockage de quantité de décalage (71) qui est configurée pour stocker une relation prédéterminée entre le couple de sortie de l'actionneur d'inclinaison (33) et une quantité de décalage de l'origine du capteur d'inclinaison (45) ; et
une section de calcul de quantité de décalage (72) qui est configurée pour calculer la quantité de décalage de l'origine du capteur d'inclinaison (45) sur la base du couple de sortie de l'actionneur d'inclinaison (33) détecté par le dispositif de détection de couple (47) et de la relation entre le couple de sortie de l'actionneur d'inclinaison (33) et la quantité de décalage de l'origine du capteur d'inclinaison (45) stockée dans la section de stockage de quantité de décalage (71), si la section de détermination (70) détermine qu'il existe un décalage d'origine du capteur d'inclinaison (45).

3. Véhicule inclinable (1) selon la revendication 2, dans lequel la section de commande autonome (60) comprend :
une section de stockage de couple de sortie (61) qui est configurée pour stocker une relation prédéterminée entre l'angle d'inclinaison latérale détecté (θ) et le couple de sortie de l'actionneur d'inclinaison (33) ;
une section de détermination de couple de sortie (62) qui est configurée pour déterminer le couple de sortie de l'actionneur d'inclinaison (33) sur la base de l'angle d'inclinaison latérale détecté (θ) détecté par le capteur d'inclinaison (45) et de la relation entre l'angle d'inclinaison latérale détecté (θ) et le couple de sortie de l'actionneur d'inclinaison (33) stocké dans la section de stockage de couple de sortie (61) ; et
une section d'exécution de commande (63) qui est configurée pour commander l'actionneur d'inclinaison (33) afin de délivrer en sortie le couple de sortie déterminé par la section de détermination de couple de sortie (62) ;
la relation entre le couple de sortie de l'actionneur d'inclinaison (33) et une quantité de décalage de l'origine du capteur d'inclinaison (45) stockée dans la section de stockage de quantité de décalage (71) est une relation telle qu'une quantité de décalage C de l'origine du capteur d'inclinaison (45) est C=B-A lorsque le couple de sortie de l'actionneur d'inclinaison (33) est T, où
T est un couple autour de l'axe de rotation du châssis de carrosserie de véhicule (10) qui est généré par la gravité et agit sur le châssis de carrosserie de véhicule (10) lorsque l'angle d'inclinaison (θ) du châssis de carrosserie de véhicule (10) est B ; et
dans la relation entre l'angle d'inclinaison latérale détecté (θ) et le couple de sortie de l'actionneur d'inclinaison (33) stocké dans la section de stockage de couple de sortie (61), A est l'angle d'inclinaison latérale détecté (θ) lorsque le couple de sortie de l'actionneur d'inclinaison (33) est T.

4. Véhicule inclinable (1) selon la revendication 2 ou 3, dans lequel le dispositif de commande (36) comprend une section d'étalonnage (73) qui est configurée pour étalonner une position d'origine du capteur d'inclinaison (45) de P0 à P0+ΔP, où P0 est la position d'origine du capteur d'inclinaison (45) et ΔP est la quantité de décalage de l'origine du capteur d'inclinaison (45) calculée par la section de calcul de quantité de décalage (72).

5. Véhicule inclinable (1) selon la revendication 1, dans lequel le dispositif de commande (36) comprend une section de changement de position d'origine (75) qui est configurée pour changer la position d'origine du capteur d'inclinaison (45) lorsque la section de détermination (70) détermine qu'il existe un décalage d'origine du capteur d'inclinaison (45) ;
la section de commande autonome (60) est configurée pour exécuter la commande autonome sur la base de la position d'origine changée du capteur d'inclinaison (45) après que la section de changement de position d'origine (75) a changé la position d'origine du capteur d'inclinaison (45) ; et
la section de changement de position d'origine (75) est configurée pour répéter le changement de la position d'origine du capteur d'inclinaison (45) jusqu'à ce que la section de détermination (70) détermine qu'il n'existe pas de décalage d'origine du capteur d'inclinaison (45).

6. Véhicule inclinable (1) selon au moins l'une des revendications 1 à 5, dans lequel le mécanisme de liaison (20) comprend :
un élément de support de roue gauche (19L) qui supporte la roue gauche (3L) ;
un élément de support de roue droite (19R) agencé à droite de l'élément de support de roue gauche (19L) qui supporte la roue droite (3R) ;
un élément de liaison (21) s'étendant vers la gauche et vers la droite du châssis de carrosserie de véhicule (10) ;
un arbre de liaison central (21Cc) s'étendant dans la direction avant-arrière du véhicule qui relie en rotation le châssis de carrosserie de véhicule (10) à l'élément de liaison (21) ;
un arbre de liaison gauche (21Lc) s'étendant dans la direction avant-arrière du véhicule qui relie en rotation l'élément de support de roue gauche (19L) à l'élément de liaison (21) ; et
un arbre de liaison droit (21Rc) s'étendant dans la direction avant-arrière du véhicule qui relie en rotation l'élément de support de roue droite (19R) à l'élément de liaison (21) ; et
l'actionneur d'inclinaison (33) est configuré pour appliquer un couple autour de l'arbre de liaison central (21Cc) sur le châssis de carrosserie de véhicule (10).

7. Véhicule inclinable (1) selon au moins l'une des revendications 1 à 6, dans lequel le capteur d'inclinaison (45) est une unité de mesure inertielle (IMU) prévue sur le châssis de carrosserie de véhicule (10).

8. Procédé de détection d'une erreur dans un capteur d'inclinaison (45) d'un véhicule inclinable (1), le véhicule inclinable (1) comprenant :
un châssis de carrosserie de véhicule (10) ayant un tube de tête (11) ;
une roue gauche (3L) agencée à gauche par rapport au tube de tête (11) ;
une roue droite (3R) agencée à droite par rapport au tube de tête (11) ;
un mécanisme de liaison (20) qui relie ensemble le châssis de carrosserie de véhicule (10), la roue gauche (3L) et la roue droite (3R) ;
un capteur d'inclinaison (45) monté sur le châssis de carrosserie de véhicule (10) qui détecte un angle d'inclinaison latérale (θ) du châssis de carrosserie de véhicule (10) ; et
un actionneur d'inclinaison (33) qui applique un couple autour d'un axe de rotation s'étendant dans la direction avant-arrière du véhicule sur le châssis de carrosserie de véhicule (10) ; le procédé comprenant :
la réception d'un signal du capteur d'inclinaison (45) pour commander l'actionneur d'inclinaison (33),
l'exécution d'une commande autonome consistant à commander l'actionneur d'inclinaison (33) de sorte qu'un angle d'inclinaison latérale détecté (θ), qui est l'angle d'inclinaison latérale (θ) du châssis de carrosserie de véhicule (10) détecté par le capteur d'inclinaison (45), devienne nul ;
la détection d'un couple de sortie de l'actionneur d'inclinaison (33) ; et
la détermination de la présence/l'absence d'un décalage d'origine du capteur d'inclinaison (45) selon que l'angle d'inclinaison latérale détecté (θ) est constant ou non et que la valeur absolue du couple de sortie de l'actionneur d'inclinaison (33) est supérieure ou égale à une valeur seuil prédéterminée.

9. Procédé d'étalonnage d'un capteur d'inclinaison (45) d'un véhicule inclinable (1) comprenant :
le procédé de détection d'une erreur dans un capteur d'inclinaison (45) d'un véhicule inclinable (1) selon la revendication 8, dans lequel le procédé comprend en outre :
lorsqu'il est déterminé qu'il existe un décalage d'origine du capteur d'inclinaison (45), le calcul d'une quantité de décalage ΔP de l'origine du capteur d'inclinaison (45) sur la base d'un couple de sortie de l'actionneur d'inclinaison (33) et d'une relation prédéterminée entre le couple de sortie de l'actionneur d'inclinaison (33) et la quantité de décalage de l'origine du capteur d'inclinaison (45) ; et
l'étalonnage d'une position d'origine du capteur d'inclinaison (45) de P0 à P0+ΔP, où P0 est la position d'origine du capteur d'inclinaison (45), ou
lorsqu'il est déterminé qu'il existe un décalage d'origine du capteur d'inclinaison (45), le changement d'une position d'origine du capteur d'inclinaison (45) ;
l'exécution de la commande autonome sur la base de la position d'origine changée du capteur d'inclinaison (45) ; et
la détermination de manière répétée de la présence/l'absence du décalage d'origine du capteur d'inclinaison (45), le changement de la position d'origine du capteur d'inclinaison (45) et l'exécution de la commande autonome jusqu'à ce qu'il soit déterminé qu'il n'existe pas de décalage d'origine du capteur d'inclinaison (45).
